# EUROPEAN PATENT APPLICATION

(11) **EP 4 718 908 A1**
(43) Date of publication of application: **01.04.2026**
(21) Application number: 23938777.2
(22) Date of filing: 29.05.2023
(51) Int. Cl.: H04W 36/00

(54) **SK-COUNTER DETERMINATION METHOD, COMMUNICATION DEVICE, AND STORAGE MEDIUM**

(71) Applicant: Shanghai Transsion Co., Ltd., Shanghai 201203 (CN)
(72) Inventor: WU, Wen, Shanghai 201203 (CN); HUANG, Wei, Shanghai 201203 (CN)
(74) Representative: Osterhoff, Utz
(86) International application number: PCT/CN2023/096930
(87) International publication number: WO 2024/243780

(57) **Abstract**

The present application provides a method for determining a secondary node counter, a communication device, and a storage medium. The method for determining the secondary node counter includes determining the secondary node counter based on first information. Through the technical solution of the present application, the terminal device can avoid unnecessary updates to the secondary node counter, and/or, when an update to the secondary node counter is required, the secondary node counter is not reused and/or the secondary node counter monotonically increases.

## Description

### TECHNICAL FIELD

The present application relates to the technical field of communication, and in particular to a method for determining a secondary node counter, a communication device, and a storage medium.

### BACKGROUND

In the current specification, a Master Node (MN) provides secondary node counter (sk-counter) to a terminal device to calculate a Secondary Node's (SN) key, S-KgNB. The MN then calculates the S-KgNB based on the sk-counter provided to the terminal device and provides it to the SN to ensure consistency between the S-KgNB of the terminal device and the SN. The sk-counter is used to calculate the S-KgNB, which needs to be monotonically increasing. Furthermore, when the security key of the bear changes due to a change in the termination point, the corresponding Packet Data Convergence Protocol (PDCP) and Radio Link Control (RLC) entities need to be re-establishment.

During the process of conceiving and implementing the present application, the inventors discovered: for intra-SN SCG selective activation, updating the sk-counter needs to be avoided. However, the terminal device cannot distinguish whether the current handover is intra-SN/inter-SN. Alternatively, R18 currently supports NR-NR Dual Connectivity (NR-DC) selective activation of cell groups without reconfiguration. Candidate cell configurations need to be pre-configured for the terminal device (including sk-counter configuration). Due to the uncertain movement path of the terminal device, the sk-counter may be reused or not monotonically incremented.

Therefore, a new method for determining the secondary node counter is needed so that the terminal device can avoid unnecessary updates to the secondary node counter, and/or, when an update to the secondary node counter is required, the secondary node counter is not reused and/or the secondary node counter monotonically increases.

The preceding description is intended to provide general background information and does not necessarily constitute prior art.

### SUMMARY

The main objective of the present application is to provide a method for determining a secondary node counter, a communication device, and a storage medium, so that the terminal device can avoid unnecessary updates to the secondary node counter, and/or, when an update to the secondary node counter is required, the secondary node counter is not reused and/or the secondary node counter monotonically increases.

The present application provides a method for determining a secondary node counter, which can be applied to a terminal device (such as a mobile phone), including:
S20: determining the secondary node counter based on first information.

Optionally, the first information includes at least one of the following:
a secondary node counter delta value;
candidate cell grouping information; and
a secondary node counter value list.

Optionally, the method further includes at least one of the following:
candidate cells share the secondary node counter delta value;
candidate cells within the same secondary node belong to a same group, and candidate cells within different secondary nodes belong to different groups;
candidate cells within the same secondary node are configured with the same secondary node counter delta value;
candidate cells within different secondary nodes are configured with different secondary node counter delta values;
secondary node counter values in the secondary node counter value list are monotonically increasing; and
the secondary node counter delta value and/or the secondary node counter value list are provided through a reference configuration.

Optionally, the step S20 includes at least one of the following:
when the terminal device performs candidate cell Conditional PSCell Addition (CPA), determining the secondary node counter based on a first rule; and
when the terminal device performs candidate cell Conditional PSCell Change (CPC), determining the secondary node counter based on a second rule.

Optionally, the determining the secondary node counter based on the first rule includes at least one of the following: setting the secondary node counter to 0; setting the secondary node counter to the secondary node counter delta value; or setting the secondary node counter to a first value in the secondary node counter value list.

Optionally, the determining the secondary node counter based on the second rule includes at least one of the following:
when the candidate cell CPC is intra-SN handover, not updating the secondary node counter; and
when the candidate cell CPC is inter-SN handover, updating the secondary node counter.

Optionally, the method further includes at least one of the following:
in response to that the candidate cell has the same secondary node counter delta value as that of the currently serving PSCell, or in response to that the candidate cell and the currently serving PSCell belong to a same group, determining to be the intra-SN handover;
in response to that the candidate cell has a different secondary node counter delta value than that of the currently serving PSCell, or in response to that the candidate cell and the currently serving PSCell belong to different groups, determining to be the inter-SN handover; and
when the candidate cell CPC is inter-SN handover, updating the secondary node counter includes: updating the secondary node counter based on the secondary node counter delta value and/or updating the secondary node counter sequentially based on the secondary node counter value list.

Optionally, the method further includes at least one of the following:
calculating or updating a secondary node key based on the secondary node counter; and
sending information of the selected candidate cell and/or the secondary node counter to a master node.

The present application further provides a method for determining a secondary node counter, which can be applied to a network device (such as a base station), including:
S10: sending first information to enable a terminal device to determine the secondary node counter based on the first information.

Optionally, the first information includes at least one of the following:
a secondary node counter delta value;
candidate cell grouping information; and
a secondary node counter value list.

Optionally, the method further includes at least one of the following:
candidate cells share the secondary node counter delta value;
candidate cells within the same secondary node belong to a same group, and candidate cells within different secondary nodes belong to different groups;
candidate cells within the same secondary node are configured with the same secondary node counter delta value;
candidate cells within different secondary nodes are configured with different secondary node counter delta values;
secondary node counter values in the secondary node counter value list are monotonically increasing; and
the secondary node counter delta value and/or the secondary node counter value list are provided through a reference configuration.

Optionally, before the step S10, the method further includes:
determining or generating the first information.

Optionally, the determining or generating the first information includes at least one of the following:
grouping received candidate PSCells selected by the secondary node, and generating candidate cell grouping information based on a grouping result;
configuring the secondary node counter delta value for the received candidate PSCells selected by the secondary node; and
generating the reference configuration, wherein the reference configuration provides the secondary node counter delta value and/or the secondary node counter value list.

Optionally, the method further includes at least one of the following:
receiving candidate cell information and/or secondary node counter sent by the terminal device; and
updating the secondary node counter according to the same rule or based on the received secondary node counter, updating the secondary node key based on the updated secondary node counter, and sending the updated secondary node key to the corresponding candidate cell.

Optionally, the terminal device determining the secondary node counter based on the first information includes at least one of the following:
when the terminal device performs candidate cell CPA, determining the secondary node counter based on a first rule; and
when the terminal device performs candidate cell CPC, determining the secondary node counter based on a second rule.

Optionally, the determining the secondary node counter based on the first rule includes at least one of the following: setting the secondary node counter to 0; setting the secondary node counter to the secondary node counter delta value; or setting the secondary node counter to a first value in the secondary node counter value list.

Optionally, the determining the secondary node counter based on the second rule includes at least one of the following:
when the candidate cell CPC is intra-SN handover, not updating the secondary node counter; and
when the candidate cell CPC is inter-SN handover, updating the secondary node counter.

Optionally, the method further includes at least one of the following:
in response to that the candidate cell has the same secondary node counter delta value as that of the currently serving PSCell, or in response to that the candidate cell and the currently serving PSCell belong to a same group, determining to be the intra-SN handover;
in response to that the candidate cell has a different secondary node counter delta value than that of the currently serving PSCell, or in response to that the candidate cell and the currently serving PSCell belong to different groups, determining to be the inter-SN handover; and
updating the secondary node counter based on the secondary node counter delta value and/or updating the secondary node counter sequentially based on the secondary node counter value list.

The present application further provides an apparatus for determining a secondary node counter, including:
a determination module, configured for determining the secondary node counter based on first information.

The present application further provides an apparatus for determining a secondary node counter, including:
a sending module, configured for sending first information to enable a terminal device to determine the secondary node counter based on the first information.

The present application also provides a communication device, including: a memory, a processor, and a program for determining a secondary node counter stored in the memory and executable on the processor. When executed by the processor, the program for determining the secondary node counter implements any of the methods for determining a secondary node counter as described above.

The communication device mentioned in the present application can be a terminal device (such as a smart terminal, specifically a mobile phone) or a network device (such as a base station). The specific meaning needs to be determined in the context.

The present application also provides a storage medium storing a computer program. When executed by a processor, the computer program implements any of the method for determining the secondary node counter as described above.

In the technical solution of the present application, the network device sends first information, and the terminal device determines the secondary node counter based on the first information. Through the technical solution of the present application, the terminal device can avoid unnecessary updates to the secondary node counter, and/or, when an update to the secondary node counter is required, it is possible to avoid reusing the secondary node counter and/or ensure that the secondary node counter monotonically increases.

### BRIEF DESCRIPTION OF THE DRAWINGS

The accompanying drawings, which are incorporated in and constitute a part of this specification, illustrate embodiments consistent with the present application and together with the description, serve to explain the principles of the present application. In order to explain the technical solutions of the embodiments of the present application more clearly, the drawings needed to be used in the description of the embodiments will be briefly introduced below. Obviously, for those of ordinary skill in the art, other drawings can be obtained based on these drawings without exerting creative efforts.
FIG. 1 is a schematic diagram of hardware structure of a mobile terminal that implements various embodiments of the present application.
FIG. 2 is a communication network system architecture diagram according to an embodiment of the present application.
FIG. 3 is a schematic diagram of hardware structure of a controller 140 involved in an embodiment of a method for determining a secondary node counter of the present application.
FIG. 4 is a schematic diagram of hardware structure of a network node 150 involved in an embodiment of a method for determining a secondary node counter of the present application.
FIG. 5 is a schematic diagram of the interaction flow between a terminal device and a network device in a first embodiment of a method for determining a secondary node counter of the present application.
FIG. 6 is a schematic diagram of the interaction flow between the terminal device and the network device in a second embodiment of a method for determining a secondary node counter of the present application.
FIG. 7 is a schematic diagram of a scenario in a third embodiment of a method for determining a secondary node counter of the present application.
FIG. 8 is a schematic diagram of a scenario in a fourth embodiment of a method for determining a secondary node counter of the present application.
FIG. 9 is a schematic diagram of a scenario in a fifth embodiment of a method for determining a secondary node counter of the present application.
FIG. 10 is a schematic diagram of the interaction flow between the terminal device and the network device in a sixth embodiment of a method for determining a secondary node counter of the present application.

The realization of the purpose, functional features and advantages of the present application will be further described in conjunction with the embodiments and with reference to the accompanying drawings. The above-mentioned drawings have shown clear embodiments of the present application, which will be described in more detail later. These drawings and textual descriptions are not intended to limit the scope of the concept of the present application in any way, but to illustrate the concept of the present application to those skilled in the art by referring to specific embodiments.

### DETAILED DESCRIPTION OF THE EMBODIMENTS

Exemplary embodiments will be described in detail herein, examples of which are illustrated in the accompanying drawings. When the following description refers to the drawings, unless otherwise indicated, the same numbers in different drawings refer to the same or similar elements. The implementations described in the following exemplary embodiments do not represent all implementations consistent with the present application. Rather, they are merely examples of apparatus and methods consistent with aspects of the present application as detailed in the appended claims.

It should be noted that in this document, the terms "comprise", "include" or any other variants thereof are intended to cover a non-exclusive inclusion. Thus, a process, method, article, or system that includes a series of elements not only includes those elements, but also includes other elements that are not explicitly listed, or also includes elements inherent to the process, method, article, or system. If there are no more restrictions, the element defined by the sentence "including a..." does not exclude the existence of other identical elements in the process, method, article or system that includes the element. In addition, components, features, and elements with the same name in different embodiments of the present application may have the same or different meanings. Its specific meaning needs to be determined according to its explanation in the specific embodiment or further combined with the context in the specific embodiment.

It should be understood that although the terms first, second, third, etc. may be used herein to describe various information, the information should not be limited to these terms. These terms are only used to distinguish information of the same type from one another. For example, without departing from the scope of this document, first information may also be called second information, and similarly, second information may also be called first information. Depending on the context, the word "if" as used herein may be interpreted as "at" or "when" or "in response to a determination". Furthermore, as used herein, the singular forms "a", "an" and "the" are intended to include the plural forms as well, unless the context indicates otherwise. It should be further understood that the terms "comprising", "including" indicate the existence of features, steps, operations, elements, components, items, species, and/or groups, but does not exclude the existence, occurrence or addition of one or more other features, steps, operations, elements, components, items, species, and/or groups. The terms "or", "and/or", "comprising at least one of" and the like used in the present application may be interpreted as inclusive, or mean any one or any combination. For example, "comprising at least one of: A, B, C" means "any of: A; B; C; A and B; A and C; B and C; A and B and C". As another example, "A, B, or C" or "A, B, and/or C" means "any of the following: A; B; C; A and B; A and C; B and C; A and B and C". Exceptions to this definition will only arise when combinations of elements, functions, steps or operations are inherently mutually exclusive in some way.

It should be understood that although the various steps in the flowchart in the embodiment of the present application are displayed sequentially as indicated by the arrows, these steps are not necessarily executed sequentially in the order indicated by the arrows. Unless otherwise specified herein, there is no strict order restriction on the execution of these steps, and they can be executed in other orders. Moreover, at least some of the steps in the figure may include multiple sub-steps or multiple stages, these sub-steps or stages are not necessarily executed at the same time, but can be executed at different times. The execution sequence thereof is not necessarily performed sequentially, but may be performed alternately or alternately with at least one part of other steps or sub-steps or stages of other steps.

Depending on the context, the words "if" as used herein may be interpreted as "at" or "when" or "in response to determining" or "in response to detecting". Similarly, depending on the context, the phrases "if determined" or "if detected (the stated condition or event)" could be interpreted as "when determined" or "in response to the determination" or "when detected (the stated condition or event)" or "in response to detection (the stated condition or event)".

It should be noted that in this article, step codes such as S10 and S20 are used for the purpose of expressing the corresponding content more clearly and concisely, and do not constitute a substantial restriction on the order. When implementing the step, those skilled in the art may execute S20 first and then S10, etc., but these should all be within the scope of protection of the present application.

It should be understood that the specific embodiments described here are only used to explain the present application, and are not intended to limit the present application.

In the following description, the use of suffixes such as "module", "part" or "unit" for denoting elements is only for facilitating the description of the present application and has no specific meaning by itself. Therefore, "module", "part" or "unit" may be used in combination.

The communication device mentioned in the present application can be a terminal device (such as a mobile terminal, specifically a mobile phone) or a network device (such as a base station). The specific reference needs to be clarified in the context. The terminal device can be implemented in various forms. For example, the terminal device described in the present application can include a mobile phone, a tablet computer, a notepad computer, a hand-held computer, a personal digital assistants (PDA), a portable media player (PMP), a navigation device, a wearable device, a smart bracelet, a pedometer and other terminal devices, as well as a fixed terminal device such as a digital TV and a desktop computer.

The present application takes a mobile terminal as an example to illustrate. Those skilled in the art will understand that, in addition to elements specifically used for mobile purposes, the configuration according to the embodiments of the present application can also be applied to the fixed terminal device.

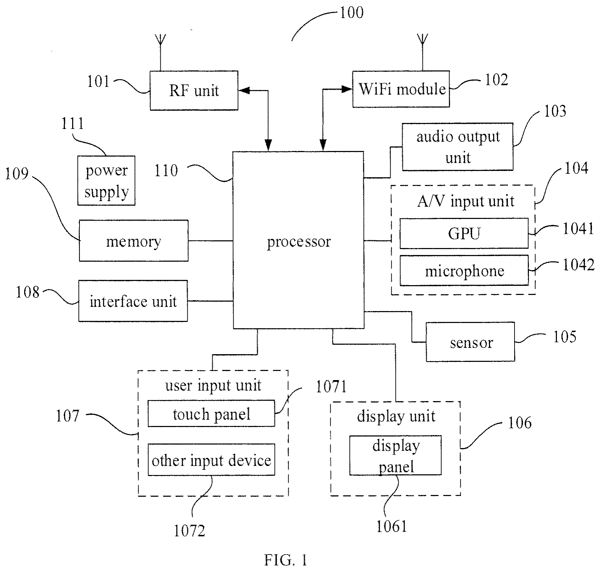

As shown in FIG. 1, FIG. 1 is a schematic structural diagram of a hardware of a mobile terminal that implements various embodiments of the present application. The mobile terminal 100 can include a Radio Frequency (RF) unit 101, a WiFi module 102, an audio output unit 103, an audio/video (A/V) input unit 104, a sensor 105, a display unit 106, a user input unit 107, an interface unit 108, a memory 109, a processor 110, a power supply 111 and other components. Those skilled in the art can understand that the structure of the mobile terminal shown in FIG. 1 does not constitute a limitation on the mobile terminal. The mobile terminal can include more or fewer components, or a combination of some components, or differently arranged components than shown in the figure.

Hereinafter, each component of the mobile terminal will be specifically introduced with reference to FIG. 1.

The radio frequency unit 101 can be used for transmitting and receiving signals during the process of transceiving information or talking. Specifically, after receiving the downlink information of the base station, the downlink information is processed by the processor 110; in addition, the uplink data is sent to the base station. Generally, the radio frequency unit 101 includes, but is not limited to, an antenna, at least one amplifier, a transceiver, a coupler, a low noise amplifier, a duplexer, and the like. In addition, the radio frequency unit 101 can also communicate with the network and other devices through wireless communication. The above-mentioned wireless communication can use any communication standard or specification, including but not limited to Global System of Mobile communication (GSM), General Packet Radio Service (GPRS), Code Division Multiple Access 2000 (CDMA2000), Wideband Code Division Multiple Access (WCDMA), Time Division-Synchronous Code Division Multiple Access (TD-SCDMA), Frequency Division Duplexing-Long Term Evolution (FDD-LTE), Time Division Duplexing-Long Term Evolution (TDD-LTE), and 5G, or the like.

Wi-Fi is a short-range wireless transmission technology. The mobile terminal can help users transmit and receive email, browse webpage, and access streaming media through the Wi-Fi module 102, and Wi-Fi provides users with wireless broadband Internet access. Although FIG. 1 shows the Wi-Fi module 102, it is understandable that it is not a necessary component of the mobile terminal and can be omitted as needed without changing the essence of the present application.

When the mobile terminal 100 is in a call signal receiving mode, a call mode, a denoting mode, a voice recognition mode, a broadcast receiving mode, or the like, the audio output unit 103 can convert the audio data received by the radio frequency unit 101 or the Wi-Fi module 102 or stored in the memory 109 into an audio signal and output the audio signal as sound. Moreover, the audio output unit 103 can also provide audio output related to a specific function performed by the mobile terminal 100 (for example, call signal reception sound, message reception sound, or the like). The audio output unit 103 can include a speaker, a buzzer, or the like.

The A/V input unit 104 is configured to receive audio or video signals. The A/V input unit 104 can include a graphics processing unit (GPU) 1041 and a microphone 1042. The graphics processing unit 1041 processes image data of still pictures or videos obtained by an image capture device (such as a camera) in a video capture mode or an image capture mode. The processed image frame can be displayed on the display unit 106. The image frame processed by the graphics processing unit 1041 can be stored in the memory 109 (or other storage medium) or sent via the radio frequency unit 101 or the Wi-Fi module 102. The microphone 1042 can receive sound (audio data) in operation modes such as a call mode, a denoting mode, a voice recognition mode, and the like, and can process such sound into audio data. The processed audio (voice) data can be converted into a format that can be sent to a mobile communication base station via the radio frequency unit 101 in the case of a call mode for output. The microphone 1042 can implement various types of noise cancellation (or suppression) algorithms to eliminate (or suppress) noise or interference generated during the process of transceiving audio signals.

The mobile terminal 100 also includes at least one sensor 105, such as a light sensor, a motion sensor, and other sensors. Specifically, the light sensor includes an ambient light sensor and a proximity sensor. The ambient light sensor can adjust the brightness of the display panel 1061 according to the brightness of the ambient light. The proximity sensor can turn off the display panel 1061 and/or the backlight when the mobile terminal 100 is moved to the ear. A gravity acceleration sensor, as a kind of motion sensor, can detect the magnitude of acceleration in various directions (usually three axes). The gravity acceleration sensor can detect the magnitude and direction of gravity when it is stationary, and can identify the gesture of the mobile terminal (such as horizontal and vertical screen switch, related games, magnetometer attitude calibration), vibration recognition related functions (such as pedometer, tap), or the like. The mobile terminal can also be equipped with other sensors such as a fingerprint sensor, a pressure sensor, an iris sensor, a molecular sensor, a gyroscope, a barometer, a hygrometer, a thermometer, an infrared sensor and other sensors, which will not be repeated herein.

The display unit 106 is configured to display information input by the user or information provided to the user. The display unit 106 can include a display panel 1061, and the display panel 1061 can be configured in the form of a liquid crystal display (LCD), an organic light emitting diode (OLED), or the like.

The user input unit 107 can be configured to receive inputted numeric or character information, and generate key signal input related to user settings and function control of the mobile terminal. Specifically, the user input unit 107 can include a touch panel 1071 and other input devices 1072. The touch panel 1071, also called a touch screen, can collect user touch operations on or near it (for example, the user uses fingers, stylus and other suitable objects or accessories to operate on the touch panel 1071 or near the touch panel 1071), and drive the corresponding connection device according to a preset program. The touch panel 1071 can include two parts: a touch detection device and a touch controller. The touch detection device detects the user's touch location, detects the signal brought by the touch operation, and transmits the signal to the touch controller. The touch controller receives the touch information from the touch detection device, converts the touch information into contact coordinates, and transmits it to the processor 110, and can receive and execute the instructions sent by the processor 110. In addition, the touch panel 1071 can be implemented in multiple types such as resistive, capacitive, infrared, and surface acoustic wave. In addition to the touch panel 1071, the user input unit 107 can also include other input devices 1072. Specifically, the other input devices 1072 can include, but are not limited to, one or more of physical keyboard, function keys (such as volume control buttons, switch buttons, etc.), trackball, mouse, joystick, etc., which are not specifically limited here.

Further, the touch panel 1071 can cover the display panel 1061. After the touch panel 1071 detects a touch operation on or near it, the touch operation is transmitted to the processor 110 to determine the type of the touch event, and then the processor 110 provides a corresponding visual output on the display panel 1061 according to the type of the touch event. Although in FIG. 1, the touch panel 1071 and the display panel 1061 are used as two independent components to realize the input and output functions of the mobile terminal, in some embodiments, the touch panel 1071 and the display panel 1061 can be integrated to implement the input and output functions of the mobile terminal, which is not specifically limited here.

The interface unit 108 serves as an interface through which at least one external device can be connected to the mobile terminal 100. For example, the external device can include a wired or wireless earphone port, an external power source (or battery charger) port, a wired or wireless data port, a memory card port, a port for connecting devices with identification modules, an audio input/output (I/O) port, a video I/O port, an earphone port, or the like. The interface unit 108 can be configured to receive input (such as data information, electricity, or the like) from an external device and transmit the received input to one or more elements in the mobile terminal 100 or can be configured to transfer data between the mobile terminal 100 and the external device.

The memory 109 can be configured to store software programs and various data. The memory 109 can mainly include a program storage area and a data storage area. The program storage area can store the operating system, at least one application required by the function (such as sound play function, image play function, etc.), or the like. The data storage area can store data (such as audio data, phone book, etc.) created based on the use of the mobile phone. In addition, the memory 109 can include a high-speed random access memory, and can also include a non-volatile memory, such as at least one magnetic disk storage device, a flash memory device, or other volatile solid-state storage devices.

The processor 110 is a control center of the mobile terminal, and uses various interfaces and lines to connect the various parts of the entire mobile terminal. By running or performing the software programs and/or modules stored in the memory 109, and calling the data stored in the memory 109, various functions and processing data of the mobile terminal are executed, thereby overall monitoring of the mobile terminal is performed. The processor 110 can include one or more processing units; and the processor 110 may integrate an application processor and a modem processor. The application processor mainly processes an operating system, a user interface, an application, or the like, and the modem processor mainly processes wireless communication. It can be understood that the foregoing modem processor may not be integrated into the processor 110.

The mobile terminal 100 can also include a power source 111 (such as a battery) for supplying power to various components. The power supply 111 can be logically connected to the processor 110 through a power management system, so that functions such as charging, discharging, and power consumption management can be managed through the power management system.

Although not shown in FIG. 1, the mobile terminal 100 can also include a BLUETOOTH module, or the like, which will not be repeated herein.

In order to facilitate the understanding of the embodiments of the present application, the following describes the communication network system on which the mobile terminal of the present application is based.

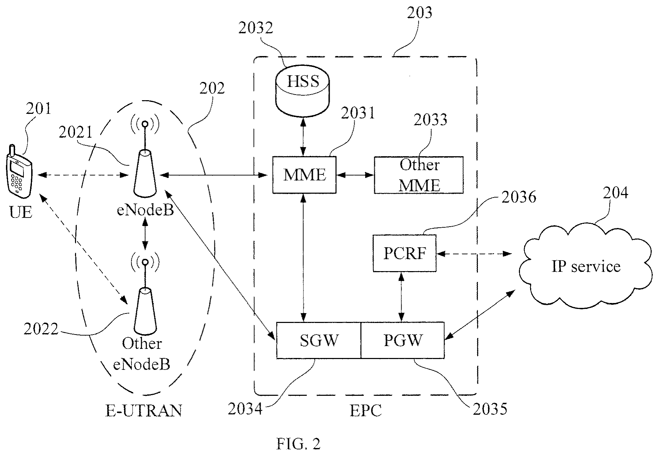

As shown in FIG. 2, FIG. 2 is a communication network system architecture diagram according to an embodiment of the present application. The communication network system is an LTE system of general mobile communication network technology. The LTE system includes a User Equipment (UE) 201, an Evolved UMTS Terrestrial Radio Access Network (E-UTRAN) 202, an Evolved Packet Core (EPC) 203, and an operator's IP service 204 that are sequentially connected in communication.

Optionally, the UE 201 can be the aforementioned terminal 100, which will not be repeated here.

E-UTRAN 202 includes eNodeB 2021 and other eNodeBs 2022. The eNodeB 2021 can be connected to other eNodeBs 2022 through a backhaul (for example, an X2 interface), the eNodeB 2021 is connected to the EPC 203, and the eNodeB 2021 can provide access from the UE 201 to the EPC 203.

The EPC 203 can include Mobility Management Entity (MME) 2031, Home Subscriber Server (HSS) 2032, other MMEs 2033, Serving Gate Way (SGW) 2034, PDN Gate Way (PGW) 2035, Policy and Charging Rules Function (PCRF) 2036, and so on. MME 2031 is a control node that processes signaling between UE 201 and EPC 203, and provides bearer and connection management. HSS 2032 is configured to provide some registers to manage functions such as the home location register (not shown), and save some user-specific information about service feature, data rates, and so on. All user data can be sent through SGW 2034, PGW 2035 can provide UE 201 IP address allocation and other functions. PCRF 2036 is a policy and charging control policy decision point for service data flows and IP bearer resources, which selects and provides available policy and charging control decisions for policy and charging execution functional units (not shown).

The IP service 204 can include Internet, intranet, IP Multimedia Subsystem (IMS), or other IP services.

Although the LTE system is described above as an example, those skilled in the art should know that, the present application is not only applicable to the LTE system, but also applicable to other wireless communication systems, such as GSM, CDMA2000, WCDMA, TD-SCDMA, 5G and new network systems in the future (such as 6G), or the like, which is not limited herein.

Based on the above-mentioned mobile terminal hardware structure and communication network system, various embodiments of the present application are proposed.

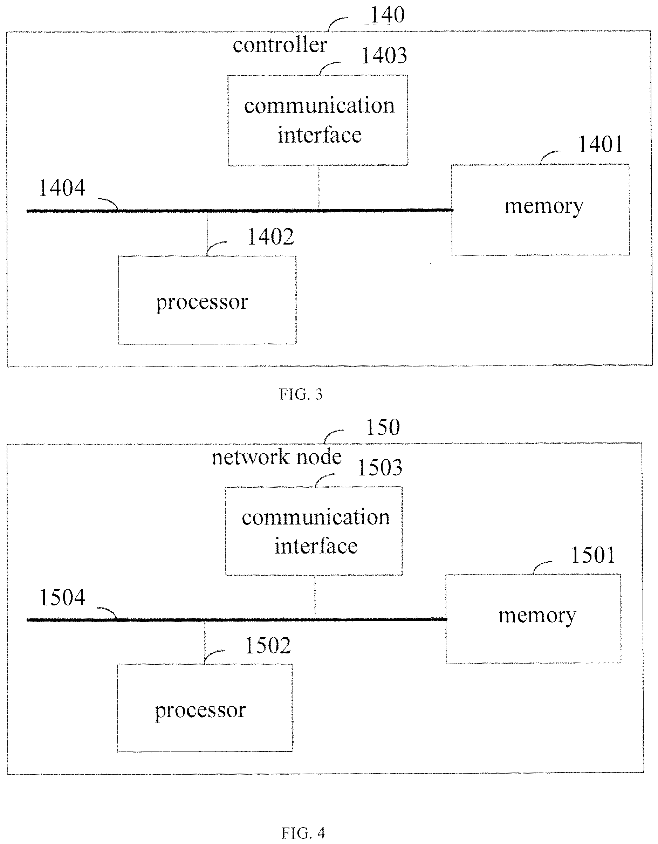

FIG. 3 is a schematic diagram of hardware structure of a controller 140 provided in the present application. The controller 140 includes a memory 1401 and a processor 1402, the memory 1401 is configured to store program instructions, and the processor 1402 is configured to call the program instructions in the memory 1401 to execute the steps performed by the controller in the first embodiment of the above-mentioned method. The implementation principle and beneficial effects are similar and will not be repeated here.

Optionally, the above-mentioned controller also includes a communication interface 1403, which can be connected to the processor 1402 through a bus 1404. The processor 1402 can control the communication interface 1403 to realize the receiving and sending functions of the controller 140.

FIG. 4 is a schematic diagram of hardware structure of a network node 150 provided in the present application. The network node 150 includes a memory 1501 and a processor 1502. The memory 1501 is configured to store program instructions, and the processor 1502 is configured to call the program instructions in the memory 1501 to execute the steps performed by the first node in the first embodiment of the above method. The implementation principle and beneficial effects are similar and will not be repeated here.

Optionally, the above controller also includes a communication interface 1503, which can be connected to the processor 1502 through a bus 1504. The processor 1502 can control the communication interface 1503 to implement the receiving and sending functions of the network node 150.

The above-mentioned integrated module implemented in the form of a software function module can be stored in a computer-readable storage medium. The above-mentioned software function module is stored in a storage medium, including several instructions for enabling a computer device (which can be a personal computer, a server, or a network device, etc.) or a processor to perform some steps of the methods of various embodiments of the present application.

Technical terms used in the present application are as follows:
RLC: Radio Link Control
PDCP: Packet Data Convergence Protocol
intra-SN/inter-SN: intra Secondary Node/inter Secondary Node
NR-DC: NR-NR Dual Connectivity
NR: New Radio
SN: Secondary Node
MN: Master Node
sk-counter: secondary node counter
CPA: Conditional PSCell Addition
CPC: Conditional PSCell Change
PCell: Primary Cell
PSCell: Primary SCG Cell
RRC Reconfiguration: Radio Resource Control Reconfiguration
DC: Dual Connectivity

### First embodiment

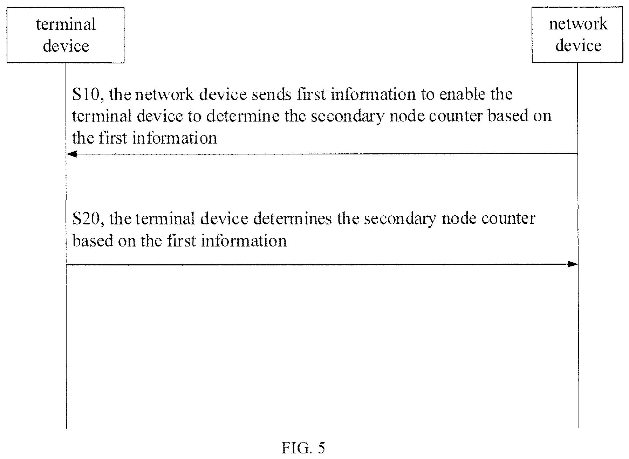

As shown in FIG. 5, the first embodiment of the present application provides a method for determining a secondary node counter, including the following steps:
S10, sending, via a network device, first information to enable a terminal device to determine the secondary node counter based on the first information; and
S20, determining, via the terminal device, the secondary node counter based on the first information.

Optionally, the first information may be at least one of the following: a secondary node counter delta value, candidate cell grouping information, and a secondary node counter value list.

Optionally, the network device is the Master Node (MN).

Optionally, the network device sends the first information to the terminal device via RRCReconfiguration. Upon receiving the first information, the terminal device initiates candidate cell condition evaluation.

Optionally, when the terminal device evaluates that a candidate cell meets the execution conditions, it applies the first information of the corresponding candidate cell to calculate or update the secondary node counter.

Optionally, the method further includes at least one of the following:
candidate cells share the secondary node counter delta value;
candidate cells within the same secondary node belong to a same group, and candidate cells within different secondary nodes belong to different groups;
candidate cells within the same secondary node are configured with the same secondary node counter delta value;
candidate cells within different secondary nodes are configured with different secondary node counter delta values;
secondary node counter values in the secondary node counter value list are monotonically increasing; and
the secondary node counter delta value and/or the secondary node counter value list are provided through a reference configuration.

Optionally, the step S20 includes at least one of the following:
when the terminal device performs candidate cell CPA, determining the secondary node counter based on a first rule; and
when the terminal device performs candidate cell CPC, determining the secondary node counter based on a second rule.

Optionally, the determining the secondary node counter based on the first rule includes at least one of the following: setting the secondary node counter to 0; setting the secondary node counter to the secondary node counter delta value; or setting the secondary node counter to a first value in the secondary node counter value list.

Optionally, the determining the secondary node counter based on the second rule includes at least one of the following:
when the candidate cell CPC is intra-SN handover, not updating the secondary node counter; and
when the candidate cell CPC is inter-SN handover, updating the secondary node counter.

Optionally, the method further includes at least one of the following:
in response to that the candidate cell has the same secondary node counter delta value as that of the currently serving PSCell, or in response to that the candidate cell and the currently serving PSCell belong to a same group, determining to be the intra-SN handover;
in response to that the candidate cell has a different secondary node counter delta value than that of the currently serving PSCell, or in response to that the candidate cell and the currently serving PSCell belong to different groups, determining to be the inter-SN handover; and
when the candidate cell CPC is inter-SN handover, updating the secondary node counter comprises: updating the secondary node counter based on the secondary node counter delta value and/or updating the secondary node counter sequentially based on the secondary node counter value list.

In technical solution of this embodiment, the network device sends first information, and the terminal device determines the secondary node counter based on the first information. Through the technical solution of this embodiment, the terminal device can avoid unnecessary updates to the secondary node counter, and/or, when an update to the secondary node counter is required, it is possible to avoid reusing the secondary node counter and/or ensure that the secondary node counter monotonically increases.

### Second embodiment

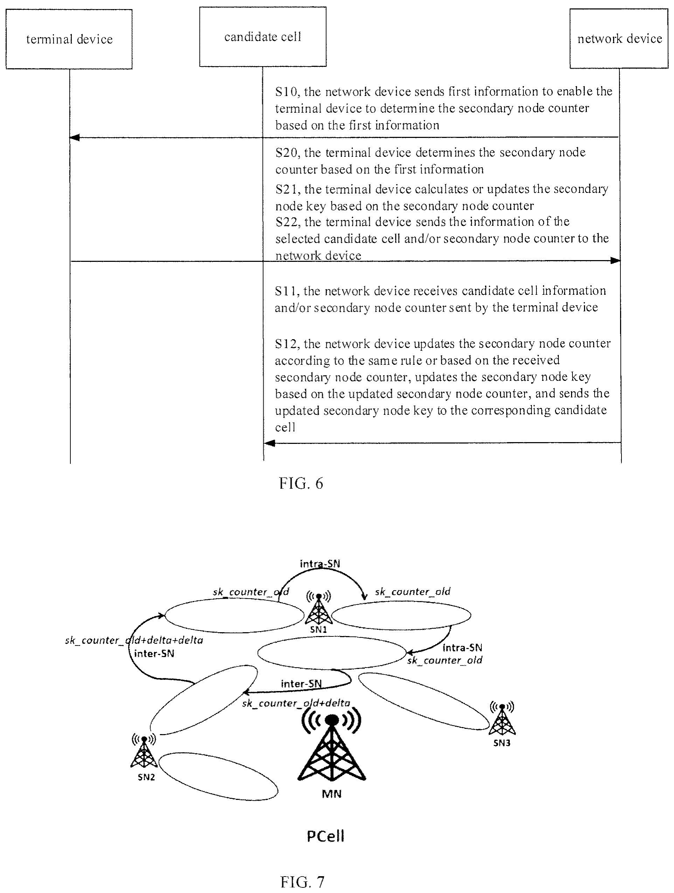

As shown in FIG. 6, based on the above embodiments, the second embodiment of the present application provides a method for determining a secondary node counter: a network device sending first information, and a terminal device determining the secondary node counter based on the first information.

Optionally, the method further includes:
Step S21, the terminal device calculating or updating the secondary node key based on the secondary node counter;
Step S22, the terminal device sending the information of the selected candidate cell and/or the secondary node counter to the network device.
Step S11, the network device receiving the candidate cell information and/or the secondary node counter sent by the terminal device.
Step S12, the network device updating the secondary node counter according to the same rule or based on the received secondary node counter, and updating the secondary node key based on the updated secondary node counter, and sending the updated secondary node key to the corresponding candidate cell.

Optionally, the first information may be at least one of the following: a secondary node counter delta value, candidate cell grouping information, or a secondary node counter values list.

Optionally, the network device is the master node (MN).

Optionally, the network device sends the first information to the terminal device via RRCReconfiguration. Upon receiving the first information, the terminal device initiates candidate cell condition evaluation.

Optionally, when the terminal device evaluates that a candidate cell meets the execution conditions, it applies the first information of the corresponding candidate cell to calculate or update the secondary node counter.

Optionally, the first information includes a reference configuration, and the secondary node counter delta value and/or the secondary node counter value list are provided through the reference configuration.

Optionally, the secondary node counter delta value represents the rule by which the secondary node counter increases when a CPA or CPC occurs at the terminal device.

Optionally, the method further includes at least one of the following:
all candidate cells share the secondary node counter delta value;
candidate cells within the same secondary node belong to a same group, and candidate cells within different secondary nodes belong to different groups;
candidate cells within the same secondary node are configured with the same secondary node counter delta value;
candidate cells within different secondary nodes are configured with different secondary node counter delta values;
secondary node counter values in the secondary node counter value list are monotonically increasing.

Optionally, the terminal device determining the secondary node counter based on the first information includes at least one of the following:
when the terminal device performs candidate cell CPA, determining the secondary node counter based on a first rule; and
when the terminal device performs candidate cell CPC, determining the secondary node counter based on a second rule.

Optionally, the determining the secondary node counter based on the first rule includes at least one of the following: setting the secondary node counter to 0; setting the secondary node counter to the secondary node counter delta value; or setting the secondary node counter to a first value in the secondary node counter value list.

Optionally, the determining the secondary node counter based on the second rule includes at least one of the following:
when the candidate cell CPC is intra-SN handover, not updating the secondary node counter; and
when the candidate cell CPC is inter-SN handover, updating the secondary node counter.

Optionally, the method further includes at least one of the following:
in response to that the candidate cell has the same secondary node counter delta value as that of the currently serving PSCell, or in response to that the candidate cell and the currently serving PSCell belong to a same group, determining to be the intra-SN handover;
in response to that the candidate cell has a different secondary node counter delta value than that of the currently serving PSCell, or in response to that the candidate cell and the currently serving PSCell belong to different groups, determining to be the inter-SN handover; and
when the candidate cell CPC is inter-SN handover, updating the secondary node counter includes: updating the secondary node counter based on the secondary node counter delta value and/or updating the secondary node counter sequentially based on the secondary node counter value list.

Optionally, after determining the secondary node counter, the terminal device sends the information of the currently selected candidate cell and/or the applied secondary node counter to the network device via RRCReconfigurationComplete.

The network device receives the candidate cell information and/or the secondary node counter sent by the terminal device, updates the secondary node counter according to the same rule or the received secondary node counter, updates the secondary node key based on the updated secondary node counter, and sends the updated secondary node key to the corresponding candidate cell.

In technical solution of this embodiment, the network device sends first information, and the terminal device determines the secondary node counter based on the first information. Through the technical solution of this embodiment, the terminal device can avoid unnecessary updates to the secondary node counter, and/or, when an update to the secondary node counter is required, it is possible to avoid reusing the secondary node counter and/or ensure that the secondary node counter monotonically increases.

### Third embodiment

Based on any one of the above embodiment, the third embodiment of the present application provides a method for determining a secondary node counter. The method includes: a network device sending first information, and a terminal device determining the secondary node counter based on the first information.

In this embodiment, all candidate cells share the secondary node counter delta value, and the terminal device determines the secondary node counter based on the secondary node counter delta value and candidate cell grouping information.

Optionally, the first information may be at least one of the following: the secondary node counter delta value, or candidate cell grouping information.

Optionally, the network device is the master node (MN).

Optionally, the network device sends the first information to the terminal device via RRC Reconfiguration. Upon receiving the first information, the terminal device initiates candidate cell condition evaluation.

Optionally, when the terminal device evaluates that a candidate cell meets the execution conditions, it applies the first information of the corresponding candidate cell to calculate or update the secondary node counter.

Optionally, the first information includes a reference configuration, and the secondary node counter delta value is provided through the reference configuration.

Optionally, the secondary node counter delta value represents the rule by which the secondary node counter increases when a CPA or CPC occurs at the terminal device.

Optionally, all candidate cells share the secondary node counter delta value.

Optionally, candidate cells within the same secondary node belong to a same group, and candidate cells within different secondary nodes belong to different groups.

Optionally, when the terminal device performs candidate cell CPA, the secondary node counter is determined based on a first rule.

Optionally, when the terminal device performs candidate cell CPC, the secondary node counter is determined based on a second rule.

Optionally, the determining the secondary node counter based on the first rule includes at least one of the following: setting the secondary node counter to 0; setting the secondary node counter to the secondary node counter delta value.

Optionally, the determining the secondary node counter based on the second rule includes at least one of the following:
when the candidate cell CPC is intra-SN handover, not updating the secondary node counter; and
when the candidate cell CPC is inter-SN handover, updating the secondary node counter.

Optionally, if the candidate cell and the currently serving PSCell belong to a same group, it is determined to be the intra-SN handover.

Optionally, if the candidate cell and the currently serving PSCell belong to a different group, it is determined to be the inter-SN handover.

Optionally, when the candidate cell CPC is inter-SN handover, updating the secondary node counter includes: updating the secondary node counter based on the secondary node counter delta value.

Optionally, taking the network device as master node (MN) as an example:
MN provides sk_counter_delta (secondary node counter delta value) in the reference configuration, that is, all candidate cell configurations share sk_counter_delta.
Optionally, sk_counter_delta represents the rule for incrementing the secondary node counter when the terminal device performs a CPA or CPC, i.e., sk_counter_new = sk_counter_current + sk_counter_delta.

Optionally, after receiving the candidate PSCells selected by each candidate secondary node (SN), the MN groups the candidate PSCells, candidate PSCells belonging to the same SN are grouped together and assigning a group ID.

Optionally, the MN sends first information carrying candidate cell grouping information and/or reference configuration to the terminal device via RRCReconfiguration. Upon receiving the first information, the terminal device initiates candidate cell condition evaluation.

Optionally, the terminal device evaluates that a candidate cell meets the execution conditions, applies the first information of the corresponding candidate cell, and the sk-counter can be determined according to any of the following rules:

If the current terminal device is not in DC (Dual Connectivity) state (i.e., no PSCell has been added), then sk-counter = 0 or sk-counter = sk_counter_delta.

If the candidate cell and the current PSCell belong to the same SN, then sk-counter uses the previously applied sk-counter, i.e., sk-counter = sk_counter_current.

If the candidate cell and the current PSCell do not belong to the same SN, then sk-counter monotonically increases based on the previously applied sk_counter, i.e., sk-counter = sk_counter_current + sk_counter_delta.

Optionally, the terminal device sends the information of candidate cell currently selected by the terminal device and/or the determined sk-counter to the MN via RRCReconfigurationComplete.

Optionally, the MN updates the S-KgNB based on the same rule or the received sk-counter and sends it to the corresponding candidate cell.

Referring to FIG. 7, and in conjunction with the scenario shown in FIG. 7, the flow of the method for determining the secondary node counter in this embodiment is described as follows:
1. The current UE is in dual connectivity (DC) state, serving cells are PCell and PSCell respectively. The sk-counter currently used by PSCell is sk_counter_old.
2. The network device decides to initiate the R18 selective activation cell group function. The candidate cells are PSCell (i.e., the current serving cell is also a candidate cell), PSCell1, PSCell2, PSCell3, PSCell4, and PSCell5.
   PSCell, PSCell1, and PSCell2 belong to SN1, PSCell3 and PSCell4 belong to SN2, and PSCell5 belongs to SN3.
3. MN generates or determines a reference configuration, the reference configuration includes sk_counter_delta and groups the candidate cells into three groups: PSCell, PSCell1, and PSCell2 in one group, PSCell3 and PSCell4 in another group, and PSCell5 in yet another group.
   The MN sends first information, including reference configuration and candidate cell grouping information, to the UE via RRCReconfiguration. Upon receiving the first information, the UE initiates candidate cell condition evaluation.
4. The UE assesses that PSCell1 meets the execution conditions and applies the first information of the corresponding candidate cell (i.e., PSCell1).
   Based on the candidate cell grouping information, the UE determines that PSCell1 and the currently serving PSCell belong to the same group, and then uses the previously applied sk-counter, i.e., sk-counter = sk_counter_old.
5. The UE sends the information of currently selected candidate cell (i.e., PSCell1) and/or the applied sk-counter to the MN via RRCReconfigurationComplete. The MN updates the S-KgNB based on the same rule or the received sk-counter and sends it to the corresponding candidate cell.
6. The UE continues to initiate candidate cell condition evaluation.

The UE evaluates that PSCell2 meets the execution conditions and applies the first information of the corresponding candidate cell (i.e., PSCell2).

The UE determines that PSCell2 and the currently serving PSCell1 belong to the same group based on the candidate cell grouping information, and then uses the previously applied sk-counter, i.e., sk-counter = sk_counter_old.

7. The UE sends the information of currently selected candidate cell (i.e., PSCell2) and/or the applied sk-counter to the MN via RRCReconfigurationComplete.

The MN updates the S-KgNB based on the updated sk-counter and sends it to the corresponding candidate cell.

8. The UE continues with the candidate cell condition evaluation.

The UE assesses that PSCell3 meets the execution conditions and applies the first information of the corresponding candidate cell (i.e., PSCell3).

Based on the candidate cell grouping information, the UE determines that PSCell3 and the currently serving PSCell2 do not belong to the same group, then sk-counter is incremented, i.e., sk-counter = sk_counter_old + sk_counter_delta.

9. The UE sends the information of currently selected candidate cell (i.e., PSCell3) and/or the applied sk-counter to the MN via RRCReconfigurationComplete.

The MN updates the S-KgNB based on the updated sk-counter and sends it to the corresponding candidate cell.

10. The UE continues to initiate candidate cell condition evaluation.

The UE evaluates that PSCell meets the execution conditions and applies the first information of the corresponding candidate cell (i.e., PSCell).

The UE determines that PSCell and the currently serving PSCell3 do not belong to the same group based on the candidate cell grouping information. Therefore, the sk-counter is incremented, i.e., sk-counter = sk_counter_current + sk_counter_delta.

11. The UE sends the information of candidate cell selected by the UE and/or the applied sk-counter to the MN via RRCReconfigurationComplete.

12. The MN updates the S-KgNB based on the same rule or the received sk-counter and sends it to the corresponding candidate cell.

In technical solution of this embodiment, the network device sends the first information, and the terminal device determines the secondary node counter based on the first information. All candidate cells share the secondary node counter delta value. The terminal device determines the secondary node counter based on the secondary node counter delta value and the candidate cell grouping information. Through the technical solution of this embodiment, the terminal device does not require reconfiguration of sk-counter via the network in CPA/subsequent CPC, which can avoid unnecessary secondary node counter updates, and/or, when secondary node counters need to be updated, the secondary node counter is not reused and/or the secondary node counter monotonically increases.

### Fourth embodiment

Based on any one of the above embodiments, the fourth embodiment of the present application provides a method for determining a secondary node counter.

The network device sends the first information, and the terminal device determines the secondary node counter based on the first information.

In this embodiment, each candidate cell is configured with a secondary node counter delta value. Candidate cells belonging to the same secondary node are configured with the same secondary node counter delta value; candidate cells belonging to different secondary nodes are configured with different secondary node counter delta values.

Optionally, the first information may be: the secondary node counter delta value.

Optionally, the network device is the Master Node (MN).

Optionally, the network device sends the first information to the terminal device via RRCReconfiguration. Upon receiving the first information, the terminal device initiates candidate cell condition evaluation.

Optionally, when the terminal device evaluates that a candidate cell meets the execution conditions, it applies the first information of the corresponding candidate cell to calculate or update the secondary node counter.

Optionally, the secondary node counter delta value represents the rule by which the secondary node counter increases when a CPA or CPC occurs at the terminal device.

Optionally, the candidate cells belonging to the same secondary node are configured with the same secondary node counter delta value.

Optionally, the candidate cells belonging to different secondary nodes are configured with different secondary node counter delta values.

Optionally, when the terminal device performs candidate cell CPA, the secondary node counter is determined based on a first rule.

Optionally, when the terminal device performs candidate cell CPC, the secondary node counter is determined based on a second rule.

Optionally, the determining the secondary node counter based on the first rule includes at least one of the following: setting the secondary node counter to 0; setting the secondary node counter delta value.

Optionally, the determining the secondary node counter based on the second rule includes at least one of the following:
when the candidate cell CPC is intra-SN handover, not updating the secondary node counter; and
when the candidate cell CPC is inter-SN handover, updating the secondary node counter.

Optionally, if the candidate cell and the currently serving PSCell have the same secondary node counter delta value, it is determined to be the intra-SN handover.

Optionally, if the candidate cell and the currently serving PSCell have different secondary node counter delta values, it is determined to be the inter-SN handover.

Optionally, when the candidate cell CPC is inter-SN handover, updating the secondary node counter includes: updating the secondary node counter based on the secondary node counter delta value.

Optionally, taking the network device as master node (MN) as an example:
After receiving the candidate PSCells selected by each candidate SN, the MN configures sk_counter_delta for each candidate PSCell.

Optionally, sk_counter_delta represents the rule for incrementing the sk-counter when the terminal device performs a CPC to this candidate cell, i.e., sk_counter_new = sk_counter_current + sk_counter_delta.

Optionally, the sk_counter_delta allocation rules are as follows:
Candidate PSCells belonging to the same SN are configured with the same sk_counter_delta value.

Candidate PSCells belonging to different SNs are configured with different sk_counter_delta values.

Optionally, sk_counter_delta can introduce a new field or reuse the current sk-counter field to represent. When the current sk-counter field is reused, i.e. for R18 NR-DC with selective activation cell of groups, the current sk-counter field represents sk-counter-delta, meaning the original meaning has changed.

Optionally, the MN determines or generates first information based on the candidate cell configuration and/or the sk_counter_delta information of each candidate cell configuration, and sends the first information to the terminal device via RRCReconfiguration. After receiving the first information, the terminal device starts the candidate cell condition evaluation.

Optionally, the terminal device evaluates whether a candidate cell meets the execution conditions and applies the first information of the corresponding candidate cell.

Optionally, if the terminal device is currently not in DC state, i.e., no PSCell has been added, then sk-counter=0 or sk-counter = sk_counter_delta.

Optionally, if the sk_counter_delta value of the candidate cell is different from that of the current serving PSCell, it is determined that the candidate cell and the current PSCell do not belong to the same SN. In this case, sk-counter = sk_counter_current + sk_counter_delta, that is, the sk-counter value is increased by sk_counter_delta based on the current value.

Optionally, if the sk_counter_delta value of the candidate cell is the same as that of the currently serving PSCell, then the candidate cell and the current PSCell belong to the same SN, and sk-counter = sk_counter_current, meaning the sk-counter of the current serving PSCell is reused.

Optionally, the terminal device sends the information of candidate cell selected by the terminal device and/or sk-counter to the MN via RRCReconfigurationComplete.

Optionally, the MN updates the sk-counter based on the same rule or the received sk-counter, updates the S-KgNB, and sends it to the corresponding candidate cell.

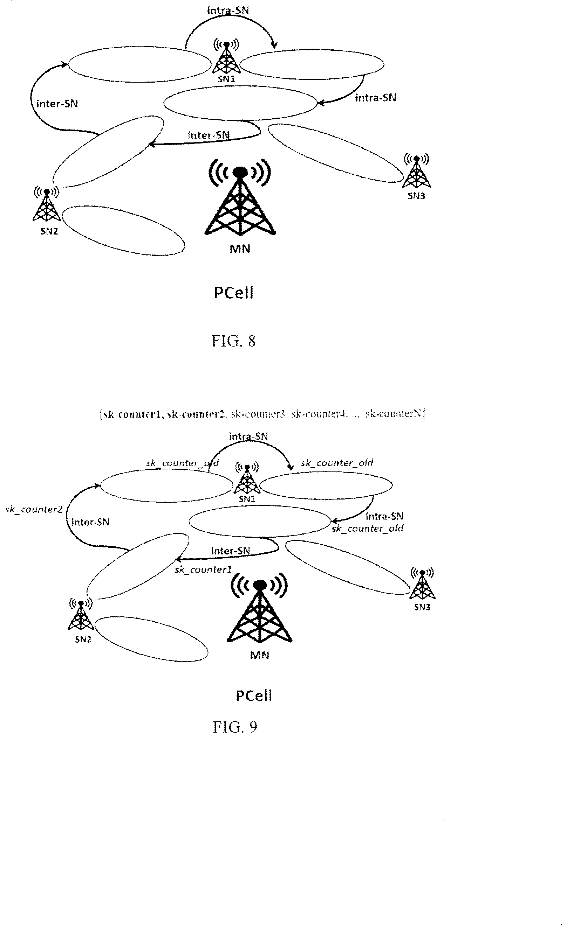

Referring to FIG. 8, and in conjunction with the scenario shown in FIG. 8, the process of determining the secondary node counter in this embodiment is as follows:
1. The UE is currently in DC state, with serving cells PCell and PSCell. The sk-counter currently used by PSCell is sk_counter_old.
2. The network device decides to initiate the R18 selective activation cell group function. The candidate cells are PSCell (i.e., the current serving cell is also a candidate cell), PSCell1, PSCell2, PSCell3, PSCell4, and PSCell5.
   PSCell, PSCell1, and PSCell2 belong to SN1; PSCell3 and PSCell4 belong to SN2; and PSCell5 belongs to SN3.
3. After receiving the candidate PSCells selected by each candidate SN, the MN configures sk-counter_delta for each candidate PSCell.

PSCell, PSCell1, and PSCell2 are configured with sk-counter_delta1.

PSCell3 and PSCell4 are configured with sk-counter_delta2.

PSCell5 is configured with sk-counter_delta3.

4. The MN determines or generates first information based on the candidate cell configuration and the configured sk_counter_delta information, and sends the first information to the UE via RRCReconfiguration. Upon receiving the first information, the UE initiates candidate cell condition evaluation.

5. The UE evaluates that PSCell1 meets the execution conditions and applies the first information of the corresponding candidate cell.

The sk_counter_delta value of PSCell1 is the same as the currently serving PSCell, then it is determined that the candidate cell and the current PSCell belong to the same SN, and sk-counter = sk_counter_old, meaning the sk-counter of the current serving PSCell is reused.

6. The UE sends the candidate cell information (i.e., PSCell1) and/or sk-counter to the MN via RRCReconfigurationComplete.

The MN updates the sk-counter based on the same rule or the received sk-counter, updates the S-KgNB and sends it to the corresponding candidate cell.

7. The UE continues to perform candidate cell condition evaluation.

The UE evaluates that PSCell2 meets the execution conditions and applies the first information of the corresponding candidate cell.

The sk_counter_delta value of PSCell2 is the same as that of the currently serving PSCell1, then it is determined that the candidate cell and the current PSCell1 belong to the same SN, and sk-counter = sk_counter_current, that is, the sk-counter of the current serving PSCell1 is reused.

8. The UE sends the information of candidate cell (i.e., PSCell2) currently selected by the UE and/or sk-counter to the MN via RRCReconfigurationComplete. The MN updates the sk-counter based on the same rule or the received sk-counter, updates the S-KgNB and sends it to the corresponding candidate cell.

9. The UE continues to perform candidate cell condition evaluation.

The UE evaluates that PSCell3 meets the execution conditions and applies the first information of the corresponding candidate cell.

The sk_counter_delta value of PSCell3 is different from that of the currently serving PSCell2, it is determined that the candidate cell and the current PSCell2 do not belong to the same SN. Therefore, sk-counter = sk_counter_current + sk_counter_delta2.

10. The UE sends the information of candidate cell (i.e., PSCell3) currently selected by the UE and/or sk-counter to the MN via RRCReconfigurationComplete.

Based on the same rule or the received sk-counter, the MN updates the sk-counter, updates the S-KgNB, and sends it to the corresponding candidate cell.

In technical solutions of this embodiment, the network device sends first information, and the terminal device determines the secondary node counter based on the first information. Each candidate cell is configured with a secondary node counter delta value. Candidate cells belonging to the same secondary node are configured with the same secondary node counter delta value; candidate cells belonging to different secondary nodes are configured with different secondary node counter delta values. Through the technical solution of this embodiment, the terminal device does not need to reconfigure the sk-counter via the network in CPA/subsequent CPC, which avoids unnecessary secondary node counter updates, and/or, when updates are needed, it is possible to avoid reusing the secondary node counter and/or ensure that the secondary node counter monotonically increases.

### Fifth embodiment

Based on any one of the above embodiment, the fifth embodiment of the present application provides a method for determining a secondary node counter.

The network device sends first information, and the terminal device determines the secondary node counter based on the first information.

In this embodiment, the terminal device determines the secondary node counter based on the secondary node counter value list and/or candidate cell grouping information.

Optionally, the first information can be at least one of the following: candidate cell grouping information, and a secondary node counter value list.

Optionally, the network device is the master node (MN).

Optionally, the network device sends the first information to the terminal device via RRCReconfiguration. Upon receiving the first information, the terminal device initiates candidate cell condition evaluation.

Optionally, when the terminal device evaluates that a candidate cell meets the execution conditions, it applies the first information of the corresponding candidate cell to calculate or update the secondary node counter.

Optionally, the first information also includes a reference configuration, and the secondary node counter value list is provided through the reference configuration.

Optionally, candidate cells within the same secondary node belong to a same group, and candidate cells within different secondary nodes belong to different groups.

Optionally, the secondary node counter values in the secondary node counter value list are monotonically increasing.

Optionally, when the terminal device performs candidate cell CPA, the secondary node counter is determined based on a first rule.

Optionally, when the terminal device performs candidate cell CPC, the secondary node counter is determined based on a second rule.

Optionally, determining the secondary node counter based on the first rule includes at least one of the following: setting the secondary node counter to 0, or setting the secondary node counter to the first value in the secondary node counter value list.

Optionally, the determining the secondary node counter based on the second rule includes at least one of the following:
when the candidate cell CPC is intra-SN handover, not updating the secondary node counter; and
when the candidate cell CPC is inter-SN handover, updating the secondary node counter.

Optionally, if the candidate cell is in the same group as the currently serving PSCell, it is determined to be the intra-SN handover.

Optionally, if the candidate cell is in a different group than the currently serving PSCell, it is determined to be the inter-SN handover.

Optionally, when the candidate cell CPC is inter-SN handover, updating the secondary node counter includes: updating the secondary node counter sequentially based on the secondary node counter delta value list.

Optionally, taking the network device as master node (MN) as an example:
When generating or determining the reference configuration for candidate cells, the MN provides an sk-counter list in the reference configuration, such as [sk-counter1, sk-counter2, sk-counter3, sk-counter4, ... sk-counterN]. The sk-counters in the sk-counter list are monotonically increasing and are valid for all candidate cells.

Optionally, after receiving the candidate PSCells selected by each candidate SN, the MN groups the candidate PSCells, candidate PSCells belonging to the same SN are grouped together, and assigns a group ID.

Optionally, the MN sends first information, including the reference configuration and group information of each candidate cell, to the terminal device via RRCReconfiguration. Upon receiving the first information, the terminal device begins condition evaluation of the candidate cells.

Optionally, the terminal device evaluates whether a candidate cell meets the execution conditions, applies the first information of the corresponding candidate cell, and determines the sk-counter.

Optionally, the rule for determining the sk-counter can be any of the following:
If the terminal device is not currently in DC state, then sk-counter is directly set to 0 or the first value in the sk-counter list (i.e., sk-counter1) is used.

If the terminal device is currently in DC state and the candidate cell and the current serving cell belong to the same group, then the previously used sk-counter is reused.

If the terminal device is currently in DC state and the candidate cell and the current serving cell do not belong to the same group, then the first unused value in the sk-counter list (e.g., sk-counter1) is used as the sk-counter to generate key.

Optionally, the terminal device sends the information of candidate cell and/or sk-counter currently selected by the terminal device to the MN via RRCReconfigurationComplete.

Optionally, the MN updates the S-KgNB according to the same rule or the received sk-counter value and sends it to the corresponding candidate cell.

Referring to FIG. 9, and in conjunction with the scenario shown in FIG. 9, the process of determining the secondary node counter in this embodiment is described as follows:
1. The UE is currently in DC state, and the serving cells are PCell and PSCell. The sk-counter currently used by PSCell is sk_counter_old.

The network device decides to initiate the R18 selective activation cell group function. The candidate cells are PSCell (i.e., the current serving cell is also a candidate cell), PSCell1, PSCell2, PSCell3, PSCell4, and PSCell5.

PSCell, PSCell1 and PSCell2 belong to SN1, PSCell3 and PSCell4 belong to SN2, and PSCell5 belongs to SN3.

PSCell, PSCell1 and PSCell2 belong to one group, PSCell3 and PSCell4 belong to another group, and PSCell5 belongs to yet another group.

2. When generating or determining the reference configuration for candidate cells, the MN provides an sk-counter list within the reference configuration, such as [sk-counter1, sk-counter2, sk-counter3, sk-counter4, ... sk-counterN].

The sk-counters in the sk-counter list are monotonically increasing and are valid for all candidate cells.

The MN provides the UE with first information including the reference configuration and group information for each candidate cell, and the UE begins evaluating the execution conditions for the candidate cells.

3. The UE evaluates that PSCell1 meets the execution conditions, applies the first information for the corresponding candidate cell, and updates the sk-counter to the next unused value in the sk-counter list, such as sk-counter1.

Optionally, if PSCell1 and PSCell belong to the same group, the first information for the corresponding candidate cell is applied, and the sk-counter is not updated.

4. The UE sends the candidate cell information and/or sk-counter selected by the UE to the MN via RRCReconfigurationComplete.

The MN updates the sk-counter value according to the same rule or the received sk-counter, updates the S-KgNB, and sends it to the corresponding candidate cell.

5. The UE continues to evaluate candidate cells. If PSCell2 meets the execution conditions, it applies the first information of the corresponding candidate cell and uses the next unused value in the sk-counter list, i.e., the second value (sk-counter2), as the sk-counter to generate key.

Optionally, if PSCell2 and PSCell1 belong to the same group, the first information of the corresponding candidate cell is applied, and the sk-counter is not updated.

6. The UE sends the candidate cell information and/or sk-counter selected by the UE to the MN via RRCReconfigurationComplete.

Optionally, the MN updates the sk-counter value according to the same rule or the received sk-counter, updates the S-KgNB, and sends it to the corresponding candidate cell.

In technical solutions of this embodiment, the network device sends first information, and the terminal device determines the secondary node counter based on the first information. The terminal device determines the secondary node counter based on the secondary node counter value list and/or candidate cell grouping information. Through the technical solution of this embodiment, the terminal device does not require reconfiguration of sk-counter via network in CPA/subsequent CPC, which can avoid unnecessary secondary node counter updates, and/or, when secondary node counters need to be updated, the secondary node counter is not reused and/or the secondary node counter monotonically increases.

### Sixth embodiment

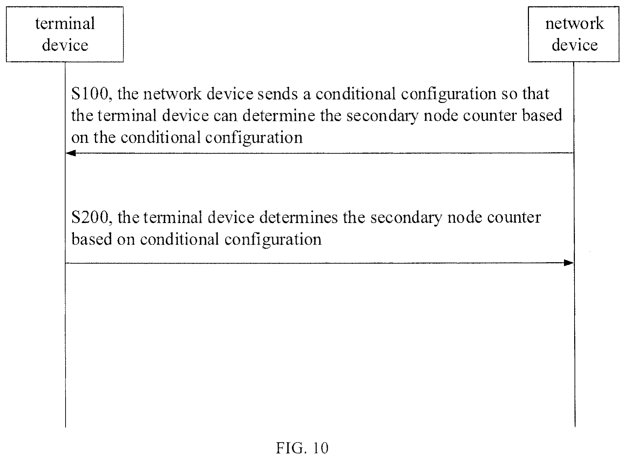

Referring to FIG. 10, the sixth embodiment of the present application provides a method for determining a secondary node counter, the method including the following steps:
S100: the network device sending a conditional configuration to enable the terminal device to determine the secondary node counter based on the conditional configuration; and
S200: determining the secondary node counter based on the conditional configuration.

Optionally, the conditional configuration includes at least one of the following: a secondary node counter delta value, candidate cell grouping information, and a secondary node counter value list.

Optionally, the method further includes at least one of the following:
candidate cells share a secondary node counter delta value;
candidate cells within the same secondary node belong to a same group, and candidate cells within different secondary nodes belong to different groups;
candidate cells within the same secondary node are configured with the same secondary node counter delta value;
candidate cells within different secondary nodes are configured with different secondary node counter delta values;
the secondary node counter values in the secondary node counter value list are monotonically increasing;
the secondary node counter delta value and/or the secondary node counter value list are provided through a reference configuration.

Optionally, the step S200 includes at least one of the following:
when the terminal device performs candidate cell CPA, determining the secondary node counter based on a first rule; and
when the terminal device performs candidate cell CPC, determining the secondary node counter based on a second rule.

Optionally, the determining the secondary node counter based on the first rule includes at least one of the following: setting the secondary node counter to 0; setting the secondary node counter to the secondary node counter delta value; or setting the secondary node counter to a first value in the secondary node counter value list.

Optionally, the determining the secondary node counter based on the second rule includes at least one of the following:
when the candidate cell CPC is intra-SN handover, not updating the secondary node counter; and
when the candidate cell CPC is inter-SN handover, updating the secondary node counter.

Optionally, the method further includes at least one of the following:
in response to that the candidate cell has the same secondary node counter delta value as that of the currently serving PSCell, or in response to that the candidate cell and the currently serving PSCell belong to a same group, determining to be the intra-SN handover;
in response to that the candidate cell has a different secondary node counter delta value than that of the currently serving PSCell, or in response to that the candidate cell and the currently serving PSCell belong to different groups, determining to be the inter-SN handover; and
when the candidate cell CPC is inter-SN handover, updating the secondary node counter includes: updating the secondary node counter based on the secondary node counter delta value and/or updating the secondary node counter sequentially based on the secondary node counter value list.

Optionally, the method further includes at least one of the following:
the terminal device calculating or updating a secondary node key based on the secondary node counter; and the terminal device sending information of the selected candidate cell and/or the secondary node counter to a master node;
the network device receiving candidate cell information and/or secondary node counter sent by the terminal device;
the network device updating the secondary node counter according to the same rule or the received secondary node counter, updating the secondary node key based on the updated secondary node counter, and sending the updated secondary node key to the corresponding candidate cell.

Optionally, before the step S100, the method further includes:
the network device determining or generating a conditional configuration.

Optionally, the network device determining or generating the conditional configuration includes at least one of the following:
the network device grouping the received candidate PSCells selected by the secondary node, and generating candidate cell grouping information based on the grouping result;
the network device configuring a secondary node counter delta value for the received candidate PSCells selected by the secondary node;
the network device generating a reference configuration, which provides the secondary node counter delta value and/or secondary node counter value list.

Optionally, as one implementation scenario, the conditional configuration includes: the secondary node counter delta value, candidate cell grouping information, all candidate cells sharing the secondary node counter delta value, and the terminal device determining the secondary node counter based on the secondary node counter delta value and the candidate cell grouping information.

Optionally, taking the network device as the master node (MN) as an example:
The MN provides sk_counter_delta (secondary node counter delta value) in its conditional configuration, meaning that all candidate cells share sk_counter_delta.

Optionally, sk_counter_delta represents the rule for increasing the secondary node counter when the terminal device executes a CPC or CPA, i.e., sk_counter_new = sk_counter_current + sk_counter_delta.

Optionally, after receiving the candidate PSCells selected by each candidate secondary node (SN), the MN groups the candidate PSCells, candidate PSCells belonging to the same SN are grouped together and assigning a group ID.

Optionally, the MN sends the conditional configuration carrying candidate cell grouping information to the terminal device via RRCReconfiguration. Upon receiving the conditional configuration, the terminal device initiates candidate cell condition evaluation.

Optionally, when the terminal device evaluates that a candidate cell meets the execution conditions, it applies the corresponding candidate cell's conditional configuration. The sk-counter can be determined according to any of the following rules:

If the terminal device is currently not in DC state (i.e., no PSCell has been added), then sk-counter = 0 or sk-counter = sk_counter_delta.

If the candidate cell and the current PSCell belong to the same SN, then the previously applied sk-counter is reused, i.e., sk-counter = sk_counter_current;
If the candidate cell and the current PSCell do not belong to the same SN, then the sk-counter is monotonically increased based on the previously applied sk_counter, i.e., sk-counter = sk_counter_current + sk_counter_delta.

Optionally, the terminal device sends the information of candidate cell selected by the terminal device and/or the applied sk-counter to the MN via RRCReconfigurationComplete.

Optionally, the MN updates the sk-counter according to the same rule or the received sk-counter, updates the S-KgNB based on the updated sk-counter, and sends it to the corresponding candidate cell.

Optionally, as another implementation scenario, the conditional configuration includes: a secondary node counter delta value. Each candidate cell is configured with a secondary node counter delta value; candidate cells belonging to the same secondary node are configured with the same secondary node counter delta value; candidate cells belonging to different secondary nodes are configured with different secondary node counter delta values.

Optionally, taking the network device as the master node (MN) as an example:
After receiving the candidate PSCells selected by each candidate SN, the MN configures sk_counter_delta for each candidate PSCell.

Optionally, sk_counter_delta represents the rule for increasing the sk-counter when the terminal device executes a CPC to this candidate cell, i.e., sk_counter_new = sk_counter_current + sk_counter_delta.

Optionally, the sk_counter_delta allocation rules are as follows:
candidate PSCells belonging to the same SN are configured with the same sk_counter_delta value.
candidate PSCells belonging to different SNs are configured with different sk_counter_delta values.

Optionally, sk_counter_delta can introduce a new field or reuse the current sk-counter field to represent. When the current sk-counter field is reused, i.e., for R18 NR-DC with selective activation cell of groups, the current sk-counter field represents sk-counter_delta, meaning its original meaning has changed.

Optionally, the MN determines or generates the conditional configuration based on the candidate cell configuration and/or the sk_counter_delta information of each candidate cell configuration, and sends the conditional configuration to the terminal device via RRCReconfiguration. Upon receiving the conditional configuration, the terminal device initiates candidate cell condition evaluation.

Optionally, the terminal device evaluates whether a candidate cell meets the execution conditions and applies the condition configuration for the corresponding candidate cell.

Optionally, if the terminal device is currently not in DC state, i.e., no PSCell has been added, then sk-counter=0 or sk-counter = sk_counter_delta.

Optionally, if the sk_counter_delta value of the candidate cell is different from that of the current serving PSCell, it is determined that the candidate cell and the current PSCell do not belong to the same SN. In this case, sk-counter = sk_counter_current + sk_counter_delta, that is, the sk-counter value is increased by sk_counter_delta based on the current value.

Optionally, if the sk_counter_delta value of the candidate cell is the same as that of the currently serving PSCell, then the candidate cell and the current PSCell belong to the same SN, and sk-counter = sk_counter_current, meaning the sk-counter of the current serving PSCell is reused.

Optionally, the terminal device sends the information of candidate cell selected by the terminal device and/or sk-counter to the MN via RRCReconfigurationComplete.

Optionally, the MN updates the sk-counter based on the same rule or the received sk-counter, updates the S-KgNB, and sends it to the corresponding candidate cell.

Optionally, as another implementation scenario, the condition configuration includes: candidate cell grouping information and a secondary node counter value list, and the terminal device determines the secondary node counter based on the secondary node counter value list and the candidate cell grouping information.

Optionally, taking the network device as master node (MN) as an example:
When generating or determining the reference configuration for candidate cells, the MN provides an sk-counter list in the reference configuration, such as [sk-counter1, sk-counter2, sk-counter3, sk-counter4, ... sk-counterN]. The sk-counters in the sk-counter list are monotonically increasing and are valid for all candidate cells.

Optionally, after receiving the candidate PSCells selected by each candidate SN, the MN groups the candidate PSCells, candidate PSCells belonging to the same SN are grouped together, and assigns a group ID.

Optionally, the MN sends the conditional configuration, including the reference configuration and group information of each candidate cell, to the terminal device via RRCReconfiguration. Upon receiving the conditional configuration, the terminal device begins performing conditional evaluation on the candidate cells.

Optionally, the terminal device evaluates whether a candidate cell meets the execution conditions, applies the corresponding candidate cell's condition configuration, and updates the sk-counter.

Optionally, the sk-counter update rule can be any of the following:
If the terminal device is currently not in DC state, then directly set sk-counter = 0 or use the first value in the sk-counter list (i.e., sk-counter1).
If the terminal device is currently in DC state, and the candidate cell and the current serving cell belong to the same group, then the previously used sk-counter is reused.
If the terminal device is currently in DC state and the candidate cell does not belong to the same group as the current serving cell, then the first unused value in the sk-counter list (e.g., sk-counter1) is used as the sk-counter to generate key.

Optionally, the terminal device sends the information of candidate cell and/or sk-counter selected by the current terminal device to the MN via RRCReconfigurationComplete.

Optionally, the MN updates the sk-counter according to the same rule or the received sk-counter value, updates S-KgNB and sends it to the corresponding candidate cell.

In technical solutions of this embodiment, the network device sends the conditional configuration, and the terminal device determines the secondary node counter based on the conditional configuration. Through the technical solution of this embodiment, the terminal device can avoid unnecessary updates to the secondary node counter, and/or, when an update is needed, it is possible to avoid reusing the secondary node counter and/or ensure that the secondary node counter monotonically increases.

The embodiments of the present application further provide an apparatus for determining a secondary node counter, applied to a terminal device or the terminal device itself, the apparatus includes:
a determination module, configured for determining the secondary node counter based on first information.

Optionally, the first information may be at least one of the following: a secondary node counter delta value, candidate cell grouping information, or a secondary node counter value list.

Optionally, the network device is the master node (MN).

Optionally, the network device sends the first information to the terminal device via RRCReconfiguration. Upon receiving the first information, the terminal device initiates candidate cell condition evaluation.

Optionally, when the terminal device evaluates that a candidate cell meets the execution conditions, it applies the first information of the corresponding candidate cell to calculate or update the secondary node counter.

Optionally, the first information includes a reference configuration, and the secondary node counter delta value and/or the secondary node counter value list are provided through the reference configuration.

Optionally, the secondary node counter delta value represents the rule by which the secondary node counter increases when a CPA or CPC occurs at the terminal device.

Optionally, the first information further includes at least one of the following:
all candidate cells share the secondary node counter delta value;
candidate cells within the same secondary node belong to a same group, and candidate cells within different secondary nodes belong to different groups;
candidate cells within the same secondary node are configured with the same secondary node counter delta value;
candidate cells within different secondary nodes are configured with different secondary node counter delta values;
the secondary node counter values in the secondary node counter value list are monotonically increasing.

Optionally, the apparatus further includes at least one of the following:
when the terminal device performs candidate cell CPA, determining the secondary node counter based on a first rule; and
when the terminal device performs candidate cell CPC, determining the secondary node counter based on a second rule.

Optionally, the determining the secondary node counter based on the first rule includes at least one of the following: setting the secondary node counter to 0; setting the secondary node counter to the secondary node counter delta value; or setting the secondary node counter to a first value in the secondary node counter value list.

Optionally, the determining the secondary node counter based on the second rule includes at least one of the following:
when the candidate cell CPC is intra-SN handover, not updating the secondary node counter; and
when the candidate cell CPC is inter-SN handover, updating the secondary node counter.

Optionally, the apparatus further includes at least one of the following:
in response to that the candidate cell has the same secondary node counter delta value as that of the currently serving PSCell, or in response to that the candidate cell and the currently serving PSCell belong to a same group, determining to be the intra-SN handover;
in response to that the candidate cell has a different secondary node counter delta value than that of the currently serving PSCell, or in response to that the candidate cell and the currently serving PSCell belong to different groups, determining to be the inter-SN handover; and
when the candidate cell CPC is inter-SN handover, updating the secondary node counter includes: updating the secondary node counter based on the secondary node counter delta value and/or updating the secondary node counter sequentially based on the secondary node counter value list.

The embodiments of the present application further provides an apparatus for determining a secondary node counter, applied to a network device or the network device itself, the apparatus includes:
a sending module, configured for sending first information to enable a terminal device to determine the secondary node counter based on the first information.

Optionally, the first information includes at least one of the following: a secondary node counter delta value; candidate cell grouping information; and a secondary node counter value list.

Optionally, the apparatus further includes at least one of the following:
candidate cells share the secondary node counter delta value;
candidate cells within the same secondary node belong to a same group, and candidate cells within different secondary nodes belong to different groups;
candidate cells within the same secondary node are configured with the same secondary node counter delta value;
candidate cells within different secondary nodes are configured with different secondary node counter delta values;
secondary node counter values in the secondary node counter value list are monotonically increasing; and
the secondary node counter delta value and/or the secondary node counter value list are provided through a reference configuration.

Optionally, the apparatus further includes:
a generation module, configured for determining or generating the first information.

Optionally, the determining or generating the first information includes at least one of the following:
grouping received candidate PSCells selected by the secondary node, and generating candidate cell grouping information based on a grouping result;
configuring the secondary node counter delta value for the received candidate PSCells selected by the secondary node; and
generating the reference configuration, where the reference configuration provides the secondary node counter delta value and/or the secondary node counter value list.

Optionally, the apparatus further includes at least one of the following:
receiving candidate cell information and/or secondary node counter sent by the terminal device; and
updating the secondary node counter according to the same rule or based on the received secondary node counter, updating the secondary node key based on the updated secondary node counter, and sending the updated secondary node key to the corresponding candidate cell.

Optionally, the terminal device determining the secondary node counter based on the first information includes at least one of the following:
when the terminal device performs candidate cell CPA, determining the secondary node counter based on a first rule; and
when the terminal device performs candidate cell CPC, determining the secondary node counter based on a second rule.

Optionally, the determining the secondary node counter based on the first rule includes at least one of the following:
setting the secondary node counter to 0;
setting the secondary node counter to the secondary node counter delta value; or
setting the secondary node counter to a first value in the secondary node counter value list; and/or
the determining the secondary node counter based on the second rule includes at least one of the following:
when the candidate cell CPC is intra-SN handover, not updating the secondary node counter; and
when the candidate cell CPC is inter-SN handover, updating the secondary node counter.

Optionally, the apparatus further includes at least one of the following:
in response to that the candidate cell has the same secondary node counter delta value as that of the currently serving PSCell, or in response to that the candidate cell and the currently serving PSCell belong to a same group, determining to be the intra-SN handover;
in response to that the candidate cell has a different secondary node counter delta value than that of the currently serving PSCell, or in response to that the candidate cell and the currently serving PSCell belong to different groups, determining to be the inter-SN handover; and
updating the secondary node counter based on the secondary node counter delta value and/or updating the secondary node counter sequentially based on the secondary node counter value list.

Embodiments of the present application further provide a communication system, including a terminal device as described in any of the above embodiments; and a network device as described in any of the above embodiments.

Embodiment of the present application further provide a communication device, including: a memory, a processor, and a program for determining a secondary node counter stored in the memory and executable on the processor. When the program for determining the secondary node counter is executed by the processor, the method for determining the secondary node counter as described in any of the above embodiments is implemented.

The communication device in the present application can be a terminal device (such as a mobile phone) or a network device (such as a base station), and the specific reference should be clarified based on the context.

The present application also provides a storage medium storing a processing program. When executed by a processor, the processing program implements the steps of the method for determining the secondary node counter as described in the aforementioned embodiments.

The communication device and the storage medium provided in the present application may include all of the technical features of any of the method for determining the secondary node counter. The expanded description and explanations are essentially the same as those in the aforementioned method embodiments and are not further elaborated here.

The present application also provides a computer program product including a computer program code. When the computer program code is executed on a computer, the computer executes the methods described in the various possible embodiments.

The present application also provides a chip including a memory and a processor. The memory is configured to store a computer program, and the processor is configured to retrieve and execute the computer program from the memory, thereby causing a device equipped with the chip to execute the methods described in the various possible embodiments.

It can be understood that the above-mentioned scenarios are only examples and do not constitute a limitation on the application scenarios of the technical solutions provided in the embodiments of the present application. The technical solutions of the present application can also be applied to other scenarios. For example, it is known to ordinary technicians in the field that with the evolution of the system architecture and the emergence of new business scenarios, the technical solutions provided in the embodiments of the present application are also applicable to similar technical problems.

The serial numbers of the embodiments of the present application are for description only and do not represent the advantages and disadvantages of the embodiments.

The steps in the method of the embodiment of the present application can be adjusted in order, merged and deleted according to actual needs.

The units in the device of the embodiment of the present application can be merged, divided and deleted according to actual needs.

In the present application, the same or similar terminology, technical solution and/or application scenario description is generally described in detail only when it appears for the first time. When it appears again later, it is generally not repeated for the sake of brevity. When understanding the technical solution and other contents of the present application, for the same or similar terminology, technical solution and/or application scenario description that is not described in detail later, please refer to the previous related detailed description.

In the present application, the descriptions of various embodiments have different focuses. For parts that are not described or denoted in a certain embodiment, please refer to the relevant descriptions of other embodiments.

The various technical features of the technical solution of the present application can be combined arbitrarily. In order to make the description concise, all possible combinations of the various technical features in the above embodiments are not described. However, as long as there is no contradiction in the combination of these technical features, they should be considered to fall within the scope of the present application.

Through the above description of the implementation, those skilled in the art can clearly understand that the above embodiment methods can be implemented by software plus the necessary general hardware platform, or by hardware, but in many cases the former is a better implementation. Based on this understanding, the technical solution of the present application essentially or the part that contributes to the existing technology can be embodied in the form of a software product, and the computer software product is stored in one of the above storage media (such as ROM/RAM, disk, optical disk), including several instructions to cause a terminal device (which can be a mobile phone, a computer, a server, a controlled terminal, or a network device, etc.) to execute the method of each embodiment of the present application.

The above embodiments can be implemented in whole or in part by software, hardware, firmware or any combination thereof. When implemented by software, it can be implemented in whole or in part in the form of a computer program product. The computer program product includes one or more computer instructions. When the computer program instructions are loaded and executed on the computer, the process or function according to the embodiment of the present application is generated in whole or in part. The computer can be a general-purpose computer, a special-purpose computer, a computer network, or other programmable device. The computer instructions can be stored in a computer-readable storage medium, or transmitted from one computer-readable storage medium to another computer-readable storage medium. For example, the computer instructions can be transmitted from one website, computer, server or data center to another website, computer, server or data center by wired (such as coaxial cable, optical fiber, digital subscriber line (DSL)) or wireless (such as infrared, wireless, microwave, etc.) means. The computer-readable storage medium can be any available medium that can be accessed by the computer or a data storage device such as a server or data center that includes one or more available media integrated. The available medium can be a magnetic medium (such as a floppy disk, a storage disk, a tape), an optical medium (such as a DVD), or a semiconductor medium (such as a Solid State Disk (SSD)), etc.

The above are only some embodiments of the present application, and are not intended to limit the scope of the present application. Any equivalent structure or equivalent process transformation made using the contents of the specification and drawings of the present application, or directly or indirectly applied in other related technical fields, shall be similarly included in the scope of the present application.

## Claims

1. A method for determining a secondary node counter, **characterized by** comprising:
S20: determining the secondary node counter based on first information.

2. The method according to claim 1, wherein the first information comprises at least one of the following:
a secondary node counter delta value;
candidate cell grouping information; and
a secondary node counter value list.

3. The method according to claim 2, wherein at least one of the following is further comprised:
candidate cells sharing the secondary node counter delta value;
candidate cells within the same secondary node belonging to a same group, and candidate cells within different secondary nodes belonging to different groups;
candidate cells within the same secondary node being configured with the same secondary node counter delta value;
candidate cells within different secondary nodes being configured with different secondary node counter delta values;
secondary node counter values in the secondary node counter value list being monotonically increasing; and
the secondary node counter delta value and/or the secondary node counter value list being provided through a reference configuration.

4. The method according to claim 1, wherein the step S20 comprises at least one of the following:
when the terminal device performs candidate cell Conditional PSCell Addition (CPA), determining the secondary node counter based on a first rule; and
when the terminal device performs candidate cell Conditional PSCell Change (CPC), determining the secondary node counter based on a second rule.

5. The method according to claim 4, wherein:
the determining the secondary node counter based on the first rule comprises at least one of the following:
setting the secondary node counter to 0;
setting the secondary node counter to the secondary node counter delta value; and
setting the secondary node counter to a first value in the secondary node counter value list; and/or
the determining the secondary node counter based on the second rule comprises at least one of the following:
when the candidate cell CPC is intra-SN handover, not updating the secondary node counter; and
when the candidate cell CPC is inter-SN handover, updating the secondary node counter.

6. The method according to claim 5, further comprising at least one of the following:
in response to that the candidate cell has the same delta value as that of a currently serving Primary SCG Cell (PSCell), or in response to that the candidate cell and the currently serving PSCell belong to a same group, determining to be the intra-SN handover;
in response to that the candidate cell has a different delta value than that of the currently serving PSCell, or in response to that the candidate cell and the currently serving PSCell belong to different groups, determining to be the inter-SN handover; and
when the candidate cell CPC is inter-SN handover, updating the secondary node counter comprises: updating the secondary node counter based on the secondary node counter delta value and/or updating the secondary node counter sequentially based on the secondary node counter value list.

7. The method according to claim 1, further comprising at least one of the following:
calculating or updating a secondary node key based on the secondary node counter; and
sending information of the selected candidate cell and/or the secondary node counter to a master node.

8. A method for determining a secondary node counter, **characterized by** comprising:
S10: sending first information to enable a terminal device to determine the secondary node counter based on the first information.

9. The method according to claim 8, wherein the first information comprises at least one of the following:
a secondary node counter delta value;
candidate cell grouping information; and
a secondary node counter value list.

10. The method according to claim 9, wherein at least one of the following is further comprised:
candidate cells sharing the secondary node counter delta value;
candidate cells within the same secondary node belonging to a same group, and candidate cells within different secondary nodes belonging to different groups;
candidate cells within the same secondary node being configured with the same secondary node counter delta value;
candidate cells within different secondary nodes being configured with different secondary node counter delta values;
secondary node counter values in the secondary node counter value list being monotonically increasing; and
the secondary node counter delta value and/or the secondary node counter value list being provided through a reference configuration.

11. The method according to claim 10, wherein before the step S10, the method further comprises:
determining or generating the first information.

12. The method according to claim 11, wherein the determining or generating the first information comprises at least one of the following:
grouping received candidate Primary SCG Cells (PSCells) selected by the secondary node, and generating candidate cell grouping information based on a grouping result;
configuring the secondary node counter delta value for the received candidate PSCells selected by the secondary node; and
generating the reference configuration, wherein the reference configuration provides the secondary node counter delta value and/or the secondary node counter value list.

13. The method according to claim 8, further comprising at least one of the following:
receiving candidate cell information and/or secondary node counter sent by the terminal device; and
updating the secondary node counter according to the same rule or based on the received secondary node counter, updating the secondary node key based on the updated secondary node counter, and sending the updated secondary node key to the corresponding candidate cell.

14. The method according to claim 8, wherein the terminal device determining the secondary node counter based on the first information comprises at least one of the following:
when the terminal device performs candidate cell Conditional PSCell Addition (CPA), determining the secondary node counter based on a first rule; and
when the terminal device performs candidate cell Conditional PSCell Change (CPC), determining the secondary node counter based on a second rule.

15. The method according to claim 14, wherein:
the determining the secondary node counter based on the first rule comprises at least one of the following:
setting the secondary node counter to 0;
setting the secondary node counter to the secondary node counter delta value; and
setting the secondary node counter to a first value in the secondary node counter value list; and/or
the determining the secondary node counter based on the second rule comprises at least one of the following:
when the candidate cell CPC is intra-SN handover, not updating the secondary node counter; and
when the candidate cell CPC is inter-SN handover, updating the secondary node counter.

16. The method according to claim 15, further comprising at least one of the following:
in response to that the candidate cell has the same secondary node counter delta value as that of the currently serving PSCell, or in response to that the candidate cell and the currently serving PSCell belong to a same group, determining to be the intra-SN handover;
in response to that the candidate cell has a different secondary node counter delta value than that of the currently serving PSCell, or in response to that the candidate cell and the currently serving PSCell belong to different groups, determining to be the inter-SN handover; and
updating the secondary node counter based on the secondary node counter delta value and/or updating the secondary node counter sequentially based on the secondary node counter value list.

17. A communication device, **characterized by** comprising: a memory and a processor, wherein the memory stores a program for determining a secondary node counter, and when the program for determining the secondary node counter is executed by the processor, the method for determining the secondary node counter according to claim 1 or 8 is implemented.

18. A storage medium, **characterized in that** a computer program is stored in the storage medium, and when the computer program is executed by a processor, the method for determining the secondary node counter according to claim 1 or 8 is implemented.
